# FASCICULE DE BREVET EUROPEEN

(11) **EP 0 495 715 B1**
(45) Date de publication et mention de la délivrance du brevet: **28.12.1994**
(21) Numéro de dépôt: 92400103.5
(22) Date de dépôt: 15.01.1992
(51) Int. Cl.: F16F 7/12, F16F 9/30, E06B 11/02, B60J 5/04

(54) **Panneau résistant aux chocs par absorption d'énergie**
Energieabsorbierende stoss-widerstandsfähige Platte
Energy-absorbing, shock-resistant panel

(30) Priorité: 16.01.1991 FR 9100439
(43) Date de publication de la demande: 22.07.1992
(73) Titulaire: COMMISSARIAT A L'ENERGIE ATOMIQUE, 75015 Paris (FR)
(72) Inventeur: Dufort, Maurice, F-33120 Arcachon (FR); Darnez, Charles, F-33200 Bordeaux coderan (FR)
(74) Mandataire: Ilgart, Jean-Christophe

(56) Documents cités:
- WO-A-89/02363
- DE-A- 1 955 624
- DE-U- 8 511 693
- FR-A- 2 464 872
- GB-A- 2 184 403
- US-A- 3 816 234

## Description

L'invention se rapporte à un panneau conçu pour résister aux chocs en absorbant leur énergie, au prix de déformation permanentes qui se traduisent par son écrasement et sa destruction, et qui peut consister en une porte, une portière, un portail ou un panneau mobile ou fixe.

On connaît des panneaux conçus pour résister aux chocs grâce à un renfort de nervures ou de raidisseurs par exemple dans FR-A-2 464 872, où le panneau est une portière d'automobile raidie par un organe en résine thermodurcissable. Bien que rigidifiant légèrement la portière, il n'est absolument pas conçu pour absorber un impact violent et programmé, c'est-à-dire d'énergie bien spécifiée, ce qui est l'objet de la présente invention, et il présente l'inconvénient de créer des contraintes à la fabrication de la portière. On connaît encore des panneaux protégés par un écran constitué de l'assemblage de cellules remplies de liquide dont l'éclatement absorbe l'énergie du choc (FR-A-2 548 726). La première conception n'est pas toujours acceptable car le comportement des raidisseurs aux chocs est difficile à saisir avec précision, et la seconde est sujette à des risques de dégradation de l'écran car il est nécessaire que les cellules restent étanches et elle ne peut guère être appliquée qu'à de très forts impacts à cause de sa complexité.

On utilise également des mousses de polyuréthane pour absorber des chocs par example en DE-U-8511693, mais les caractéristiques d'élasticité de ces matériaux varient fortement en fonction notamment de l'humidité, ce qui fait que ce matériau n'est pas adapté à être employé tel quel dans des panneaux prévus pour résister à des chocs bien définis, par des normes par exemple.

L'invention est relative à un panneau amortisseur de chocs dans lequel le matériau de protection contre les chocs est de la mousse de polyuréthane et qui est cependant apte à résister à des chocs parfaitement définis. Pour cela, la mousse de polyuréthane est une mousse rigide qui remplit un caisson, porté par une plaque rigide reliée à une structure de support. Le caisson comporte une face avant (orientée vers la direction d'où vient le choc) qui est légèrement convexe dans cette direction afin de favoriser un écrasement uniforme. Le caisson est éventuellement doublé d'un revêtement étanche pour une plus grande sûreté. La couche de mousse a une épaisseur (perpendiculairement au panneau) qui est avantageusement dix fois celle de la face avant du caisson, ou plus.

Dans une autre conception, le caisson s'étend entre deux cloisons qui forment alors un panneau double.

Enfin, une mousse rigide appropriée est constituée par un mélange d'isocyanate et de polyol et comporte un taux de porosité inférieur à 10% et une résistance à la compression supérieure à 3 mégapascals pour une densité de 0,3.

On va maintenant décrire l'invention plus en détail à l'aide des figures suivantes annexées à titre illustratif et non limitatif :
- les figures 1 et 2 représentent une réalisation de l'invention pour un portail, la figure 1 étant une vue de face et la figure 2 une vue en coupe horizontale ;
- les figures 3 et 4 représentent une autre réalisation de l'invention pour une portière de voiture, la figure 3 étant une vue de face et la figure 4 une vue en coupe horizontale ;et
- la figure 5 représente le comportement du caisson et de son contenu à un choc.

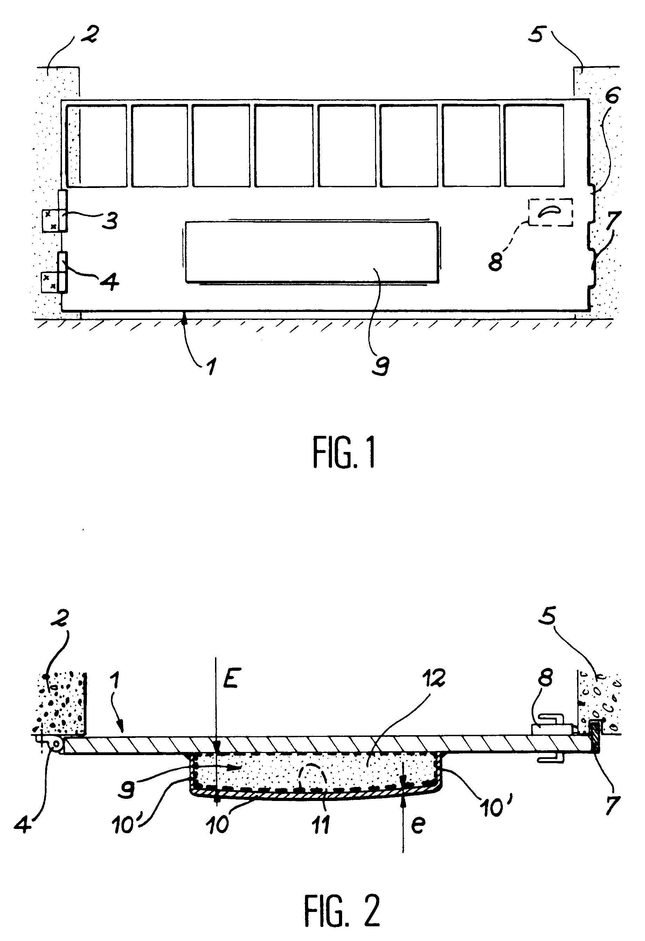

Les figures 1 et 2 représentent un portail 1 à protéger qui est fixé à un premier poteau 2 vertical par au moins deux charnières 3 et 4 et s'appuie sur un poteau opposé 5, également vertical, par au moins deux butées 6 et 7 qui constituent d'autres points de fixation en cas de choc. Les bords latéraux du portail 1 s'étendent devant les poteaux 2 et 5, ce qui empêche que le poteau 1 ne s'enfonce au moment du choc par suite de l'arrachement des charnières 3 et 4 et des butées 6 et 7. Une serrure 8 à mi-hauteur, entre les butées 6 et 7, peut également participer à ce rôle. Les butées 6 et 7 sont aux mêmes niveaux verticaux que les charnières 3 et 4 et définissent avec elles un dispositif rectangulaire d'appui du portail 1 en cas de choc. Un caisson 9 parallélipipédique s'étend sensiblement au centre du portail 1, dans le rectangle mentionné, pour au moins sa plus grande partie ; il est soit entièrement fermé soit, comme ici, ouvert du côté dirigé vers le portail 1. Dans ce dernier cas, il convient de réaliser une soudure continue ou un moyen d'assemblage équivalent pour l'assembler de manière étanche au portail 1 ; un assemblage pour des boulons peut suffire si le caisson 9 est fermé. Il est de toute façon essentiel que la structure à l'arrière du caisson 9 reste rigide pendant le choc.

La face avant 10, exposée aux chocs, du caisson 9 est avantageusement plus épaisse que les faces latérales et forme une plaque rigide légèrement convexe vers le côté de l'impact. Les plaques de tôles latérales 10′ sont de faible épaisseur. Elles assurent le support de la face avant 10 et l'étanchéité du caisson en contenant la mousse. Elles ne sont pas destinées à contribuer à la résistance du caisson 9 et cèdent ou s'affaissent dès le début de l'impact.

Les tôles du caisson 9 portent avantageusement un revêtement de résine 11 sur leur face interne, ce qui offre une garantie supérieure d'étanchéité. Le revêtement pourrait aussi être remplacé par une enveloppe déformable de nature quelconque.

Le caisson 9 est rempli entièrement d'une couche de mousse 12 de polyuréthane qui a été injectée et qui est rigide, ayant un faible taux de porosité ouverte (de l'ordre de 5%) et une résistance à la compression élevée (de l'ordre de 5 MPa pour une densité de 0,3). Cette couche se compose de préférence d'un mélange d'isocyanate et de polyol. L'isocyanate est généralement un prépolymère (par exemple à base de toluène) permettant d'atténuer notablement le caractère exothermique de la réaction de polymérisation. Le polyol a fréquemment pour base un polyéther (par exemple à souche de saccharose) qui comporte des additifs de réglage des mécanismes de réticulation et d'expansion : des catalyseurs (des amines par exemple), des agents porophores tels que des composés chlorofluorocarbonés, des agents tensio-actifs (comme des huiles de silicones) pour régler la taille des cellules, du diéthylène-glycol pour étendre les chaînes de polymérisation et éventuellement des additifs ignifugeants ou d'absorption de la chaleur à condition que les propriétés d'absorption de l'énergie des chocs soient préservées.

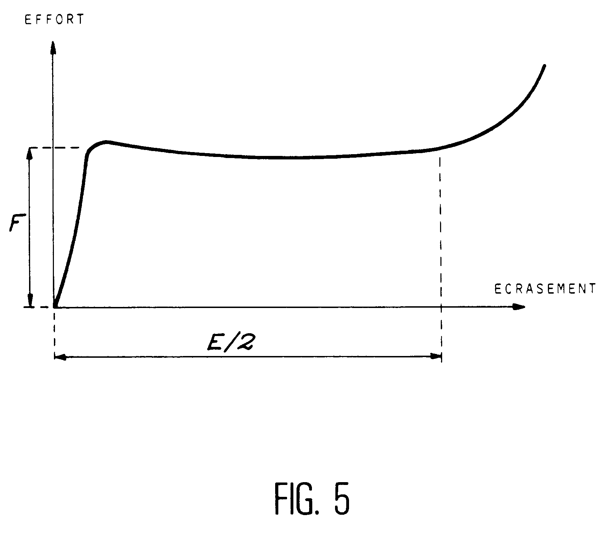

Cette énergie absorbée peut être calculée avec une grande précision si on connaît le comportement expérimental du matériau à l'écrasement. En effet, pour une couche d'une telle mousse rigide, la force de résistance à l'écrasement augmente d'abord rapidement (figure 5) et sensiblement linéairement jusqu'à atteindre un palier pratiquement horizontal dont la hauteur F dépend du caractère dynamique de l'effort appliqué et qui se prolonge jusqu'à ce que l'écrasement atteigne la moitié E/2 de l'épaisseur de la couche de mousse 12. L'énergie absorbée est égale au produit de la force au palier et de la largeur du palier exprimée en distance d'écrasement, si on néglige l'énergie très faible absorbée pendant la première phase. La valeur obtenue est invariable car le caisson étanche 9 protège la mousse des dégradations atmosphériques ou autres et en particulier de l'humidité. La face avant 10 rigide et convexe garantit un écrasement égal sur toute la surface de la couche 12.

On dimensionnera donc la couche de mousse 12 avec une épaisseur au moins égale au double de l'écrasement qui a été calculé pour le choc hypothétique auquel le panneau doit résister. La résistance de la mousse dépend des conditions de polymérisation et notamment de sa densité, c'est-à-dire de la composition du mélange.

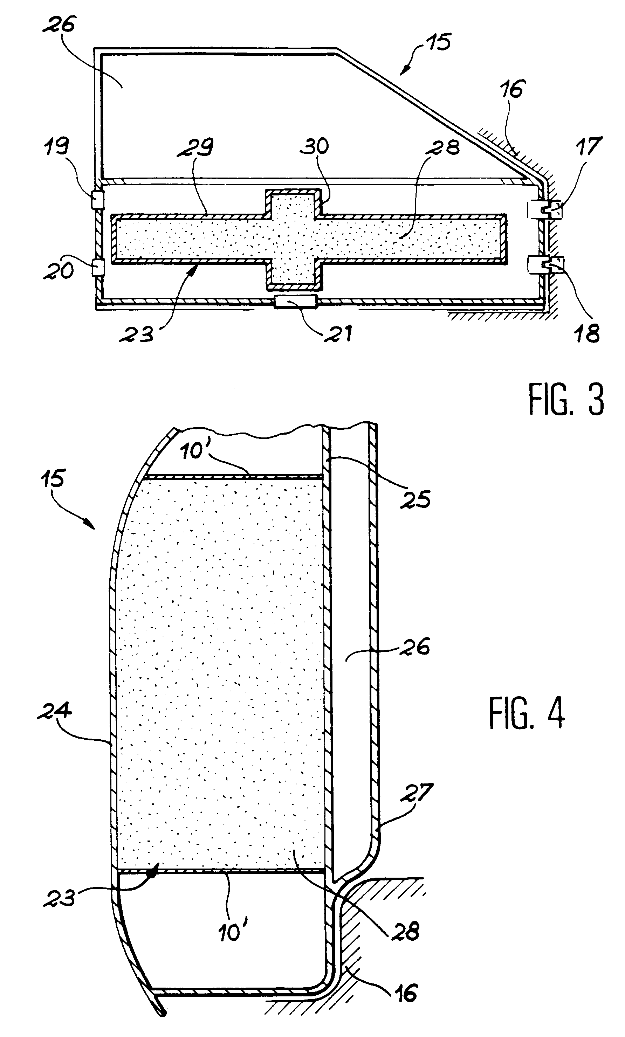

Une autre réalisation est représentée sur les figures 3 et 4. La structure à protéger est ici une portière 15 d'automobile reliée à une carrosserie 16 par deux charnières 17 et 18 à l'avant de la portière 15 et qui s'imbrique à l'arrière dans la carrosserie 16 par des points de butée ou des serrures 19 et 20 : il serait avantageux dans une telle conception de modifier quelque peu le système usuel de fermeture des portières d'automobiles en utilisant deux points de butée 19 et 20 ou de fixation à l'arrière, aux mêmes hauteurs que les charnières 17 et 18. Une imbrication 21 est ajoutée en bas de la portière 15, sensiblement à mi-largeur, afin de limiter le fléchissement de la portière 15 au choc.

Un caisson 23 étanche protège la portière 15. Il est formé par une tôle assez mince qui s'étend entre la tôle extérieure 24 convexe vers l'extérieur et une plaque d'appui renforcée 25 qui le sépare d'un volume destiné au rangement de la vitre 26. La tôle intérieure de la portière est désignée par la référence 27. La tôle extérieure 24 pourrait être raidie pour rester à sa forme originelle en cas de choc et écraser uniformément une couche de mousse 28 qui remplit le caisson 23. La plaque d'appui 25 s'appuie sur la carrosserie 16 en cas de choc et reste rigide car elle est renforcée à cet effet.

La couche de mousse 28 est directement en contact avec les tôles 24 et 25 dans cette conception. Le comportement au choc est identique à celui de la réalisation précédente. On peut envisager de modeler le caisson 23 en forme de croix, avec une branche horizontale 29 s'étendant sur presque toute la largeur de la portière et une branche verticale 30 s'étendant pratiquement du bas de la portière à la baie de vitre 26. D'autres constructions sont encore envisageables, de même que d'autres applications de l'invention.

## Revendications

1. Panneau comportant un dispositif amortisseur de chocs caractérisé par une plaque rigide (1, 15) reliée à une structure de support (2, 5, 16), un caisson étanche (9, 23) rempli de mousse rigide de polyuréthane devant la plaque rigide, le caisson étanche comportant une face avant (10, 24) légèrement convexe du côté du choc.

2. Panneau selon la revendication 1, caractérisé en ce que la mousse de polyuréthane comporte une épaisseur d'au moins dix fois l'épaisseur de la face avant.

3. Panneau selon la revendication 2, caractérisé en ce que l'épaisseur de la mousse est calculée pour subir un écrasement au plus égal à la moitié de ladite épaisseur en cas d'application d'un choc auquel le panneau doit résister.

4. Panneau selon l'une quelconque des revendications 1 à 3, caractérisé en ce que la plaque rigide est reliée à la structure de support par au moins quatre points d'ancrage (3, 4, 6, 7, 17, 18, 19, 20) autour du caisson.

5. Panneau selon l'une quelconque des revendications 1 à 4, caractérisé en ce que la mousse est un mélange d'isocyanate et de polyol à taux de porosité inférieur à 10% et à résistance à la compression supérieure à 3 mégapascals pour une densité de 0,3.

6. Panneau selon l'une quelconque des revendications 1 à 5, caractérisé en ce que le caisson comporte des éléments latéraux de faible rigidité (10′) destinés à contenir la mousse et supporter la face avant (10) et conçus pour céder à l'impact.

## Claims

1. Panel including an impact-cushioning device characterized by a rigid plate (1, 15) connected to a support structure (2, 5, 16), a sealed box (9, 23) filled with rigid polyurethane foam in front of the rigid plate, the sealed box including a front face (10, 24) which is slightly convex on the impact-side.

2. Panel according to Claim 1, characterized in that the polyurethane foam has a thickness of at least ten times the thickness of the front face.

3. Panel according to Claim 2, characterized in that the thickness of the foam is calculated in order to undergo crushing equal to at most half the said thickness in the event of the application of an impact which the panel is to resist.

4. Panel according to any one of Claims 1 to 3, characterized in that the rigid plate is connected to the support structure by at least four anchoring points (3, 4, 6, 7, 17, 18, 19, 20) around the box.

5. Panel according to any one of Claims 1 to 4, characterized in that the foam is a mixture of isocyanate and polyol with a porosity factor of less than 10% and with a compression strength of greater than 3 megapascals for a relative density of 0.3.

6. Panel according to any one of Claims 1 to 5, characterized in that the box includes low-rigidity lateral elements (10') which are intended to contain the foam and to support the front face (10) and are designed to yield in a crash.

## Patentansprüche

1. Tafel, eine Stoßdämpfungsvorrichtung umfassend, **gekennzeichnet** durch eine steife Platte (1, 15), verbunden mit einer Trägerstruktur (2, 5, 16), und eine dichte Kammer (9, 23), gefüllt mit steifem Polyurethanschaum, vor der steifen Platte, wobei die dichte Kammer eine Vorderseite (10, 24) aufweist, die leicht konvex ist auf der Stoßseite.

2. Tafel nach Anspruch 1, dadurch gekennzeichnet, daß der Polyurethanschaum eine Dicke von wenigstens zehnmal der Dicke der Vorderseite aufweist.

3. Tafel nach Anspruch 2, dadurch gekennzeichnet, daß die Dicke des Schaums so berechnet wird, daß er im Falle eines Stoßes, den die Tafel aushalten muß, auf höchstens die Hälfte der besagten Dicke zusammengedrückt wird.

4. Tafel nach einem der Ansprüche 1 bis 3, dadurch gekennzeichnet, daß die steife Platte mit der Trägerstruktur um die Kammer herum durch wenigstens vier Verankerungspunkte (3, 4, 6, 7, 17, 18, 19, 20) verbunden ist.

5. Tafel nach einem der Ansprüche 1 bis 4, dadurch gekennzeichnet, daß der Schaum eine Mischung aus Isocyanat und Polyol mit einem Porositätsgrad kleiner als 10% und einer Druckfestigkeit größer als 3 Megapascal für eine Dichte von 0,3 ist.

6. Tafel nach einem der Ansprüche 1 bis 5, dadurch gekennzeichnet, daß die Kammer seitliche Elemente geringer Steifigkeit (10') umfaßt, dazu bestimmt, den Schaum einzuschließen und die Vorderseite (10) zu stützen und ausgelegt, um dem Stoß nachzugeben.
